Europäisches Patentamt

**European Patent Office**

**Office européen des brevets**

(19)

(11) Veröffentlichungsnummer: **0 071 154**
**B1**

(12) **EUROPÄISCHE PATENTSCHRIFT**

(45) Veröffentlichungstag der Patentschrift:
23.10.85

(51) Int. Cl.⁴: **B 65 G 57/24,** B 65 G 47/54,
B 65 G 59/06

(21) Anmeldenummer: **82106527.3**

(22) Anmeldetag: **20.07.82**

(54) **Vorrichtung zum Stapeln von Stück- oder Sackgut auf Paletten.**

(30) Priorität: **25.07.81 DE 3129388**
**23.03.82 DE 3210547**

(43) Veröffentlichungstag der Anmeldung:
**09.02.83 Patentblatt 83/6**

(45) Bekanntmachung des Hinweises auf die Patenterteilung:
**23.10.85 Patentblatt 85/43**

(84) Benannte Vertragsstaaten:
**FR GB IT**

(56) Entgegenhaltungen:
**DE - B - 1 114 143**
**FR - A - 1 142 619**
**GB - A - 1 074 964**
**GB - A - 1 504 888**
**GB - A - 2 003 818**

(73) Patentinhaber: **Weykam, Gottfried J., Hesslerstrasse 14,**
**D-4700 Hamm 1 (DE)**

(72) Erfinder: **Weykam, Gottfried J., Hesslerstrasse 14,**
**D-4700 Hamm 1 (DE)**

(74) Vertreter: **Patentanwälte Schulze Horn und Hoffmeister,**
**Goldstrasse 36, D-4400 Münster (DE)**

## Beschreibung

Die Erfindung betrifft eine Vorrichtung zum Stapeln von Stück- oder Sackgut auf Paletten, die miteinander verbunden eine Zuführbahn für das Gut, eine die Güter gleichzeitig speichernde Umlenkeinrichtung und einen im Palettierbereich angeordneten Ablegewagen aufweist.

Es ist bereits eine Anzahl von Palettiereinrichtungen bekannt, die mittels angetriebener Rollenförderbahnen, Förderbändern und dergleichen Paletten beladen. Die Paletten werden dabei einzeln in den Palettierbereich eingeführt und die zu stapelnden Säcke werden in Lagen abgelegt, teilweise in der Stellung, in welcher sie herangefördert werden, ein weiterer Teil gedreht, d. h. quer zu den erstgenannten Säcken.

Insbesondere zu nennen sind hier die Vorrichtungen nach der GB-A-1 074 964 und der GB-A-2 003 818. In der Vorrichtung nach der erstgenannten Schrift erfolgt die Umlenkung des transportierten Gutes von einer Transportrichtung in die dazu rechtwinklige andere Richtung durch das Heben bzw. Senken von schmalen, parallel zueinander zwischen Transportrollen angeordneten Förderbändern bzw. Ketten. Beide Fördermittel werden angetrieben und sorgen so für den Weitertransport der Güter. Im Palettierbereich werden Lagen von für die Palettierung passend angeordneten Gütern mit mechanischen Fördermitteln auf eine höhenrichtig angeordnete Platte bzw. vorhergehende Lage von Gütern geschoben bzw. gedrückt.

Die Vorrichtung nach der zweiten Schrift weist eine Umlenkeinrichtung auf, welche mit zwischen Förderrollen beweglichen Schubblechen bzw. Drückern arbeitet, die das herangerollte Gut senkrecht zur vorherigen Transportrichtung in eine Speichereinrichtung schieben bzw. drücken. Von dort werden Lagen von Gütern in einen Ablegewagen geschoben, welcher in vertikaler Richtung verfahrbar ist und nach Einstellung der passenden Höhe die Lage von Gütern auf eine Palette bzw. eine vorhergehende Lage von Gütern schiebt bzw. drückt.

Nachteilig bei beiden Vorrichtungen ist, daß die zu palettierenden Güter angehoben werden müssen, sei es zur Umlenkung oder zur Palettierung. Hierfür sind vor allem bei schwererem Gut, z. B. Zementsäcken, relativ große Kräfte erforderlich. Diese bedingen einen hohen Energieverbrauch, einen entsprechend hohen mechanischen Aufwand und einen langsamen Arbeitsablauf. Ein weiterer Nachteil ist bei den bekannten Vorrichtungen, daß das transportierte Gut mit Hilfe von Schubblechen, Drückern o. ä. über Teile des Transportweges fortbewegt wird. Wegen der einseitig durch das Schubblech ausgeübten Kraft und wegen der auftretenden Reibung an der Unterseite des bewegten Gutes muß dieses bzw. dessen Verpackung sehr stabil und unempfindlich sein, um Beschädigungen oder Deformationen zu vermeiden. Die auftretenden Reibungsverluste tragen ebenfalls zu einem hohen Energieverbrauch und einem langsamen Arbeitsablauf bei.

Es ist jetzt Aufgabe der Erfindung, eine Vorrichtung zum Stapeln von Stück- oder Sackgut auf Paletten und insbesondere eine Vorrichtung zum Stapeln von Säcken auf Paletten zu schaffen, bei welcher die genannten Nachteile nicht mehr auftreten und die es erlaubt, bei geringerem Energieverbrauch eine schnelle und besonders zuverlässige Palettierung vorzunehmen, ohne daß die zu palettierenden Güter beschädigt oder deformiert werden, und so eine besonders gute Stapelung in Kreuzverbänden erreicht wird.

Die erfindungsgemäße Vorrichtung soll weiterhin auch über einen längeren Zeitraum verschleißfrei und vollautomatisch arbeiten können. Es sollen dabei in bekannter Weise Stapel von Gütern hergestellt werden, bei denen die Güter mit ihrer Längserstreckung zum Teil unter einem rechten Winkel zueinander liegen.

Diese Aufgabe wird erfindungsgemäß durch eine Vorrichtung zum Stapeln von Stück- oder Sackgut auf Paletten gelöst, die miteinander verbunden eine Zuführbahn für das Gut, eine die Güter gleichzeitig speichernde Umlenkeinrichtung und einen im Palettierbetrieb angeordneten Ablegewagen aufweist, bei der die Umlenkeinheit einen Rollenrost enthält, dessen Neigung zu einem Anschlag hinweist und der unter eine Rollenbahn absenkbar ist, deren Rollen rechtwinklig zu den Rollen des Rollenrostes verlaufen.

Durch eine derartige Ausbildung der Umlenkeinheit wird erreicht, daß die Fortbewegung des Gutes allein durch die Wirkung der Schwerkraft auf dem geneigten Rollenrost erfolgt. Zur Umlenkung ist lediglich der erste Rollenrost abzusenken, worauf das Gut auf den zweiten, senkrecht zum ersten verlaufenden Rollenrost zu liegen kommt. Vorteilhaft ist dieser zweite Rollenrost ebenfalls geneigt, so daß auch die Weiterbeförderung des Gutes nach dem Umlenken allein durch Schwerkraft erfolgt. Vor der Umlenkung des nächsten Gutes ist nur der erste Rollenrost wieder in seine angehobene Stellung zu bringen, ohne daß zusätzlich das Gewicht des Gutes mitgehoben werden muß.

Weiterhin weist die erfindungsgemäße Vorrichtung vorteilhaft einen Ablegewagen auf, der aus einem Rollenrost besteht und der in Arbeitsrichtung seiner Rollen in horizontaler und/oder leicht geneigter Ebene beweglich ist, wobei die Rollen angetrieben sein können oder auch nicht. Das Ablegen einer Lage der Güter erfolgt mit einem solchen Ablegewagen in der Weise, daß der Wagen nach Aufnahme einer Lage der Güter über einer in eine passende Höhe gebrachten Platte bzw. schon abgelegten Lage entgegengesetzt zur Transportrichtung seiner Rollen so bewegt wird, daß die horizontale Position der abzulegenden Lage der Güter relativ zur Palette gleich bleibt. Die neue Lage selbst führt beim Ablegen lediglich eine kleine Bewegung in vertikaler Richtung aus. Bei geneigter Ausführung des Rollenrostes erübrigt sich ein Antrieb der Rollen und es wird außerdem die Rück-Bewegung des Wagens beim Ablegen der Güter unterstützt.

Beide Teile der erfindungsgemäßen Vorrichtung bieten den Vorteil eines sehr geringen Energieaufwandes durch weitestgehende Nutzung der Schwerkraft bei der Förderung. Hinzu kommt das Fehlen von energieaufwendigen Schubblechen oder Drückern o. ä., da das Gut in allen Phasen des Durchlaufes durch die Vorrichtung auf Rollen läuft. Damit wird das Gut bzw. seine Verpackung nicht durch äußere Krafteinwirkung und Reibung deformiert oder beschädigt, sondern sehr schonend transportiert und palettiert.

Die Geschwindigkeit des Transportes der Güter ist durch Verstellen der Neigungen der Rollenroste einstellbar. Da Schubbleche und dergleichen, deren Betrieb störungsanfällig ist, nicht vorhanden sind, und die vorhandenen Fördermittel lediglich geringfügige bzw. kurzwegige Bewegungen ausführen, ist ein flüssiger Betriebsablauf der Vorrichtung und damit eine hohe Ablauf- und Ablegegeschwindigkeit sichergestellt.

Angesichts der durch den Erfindungsgegenstand erreichbaren Vorteile kann von einer optimalen Lösung der anstehenden Probleme gesprochen werden.

Im folgenden wird ein Ausführungsbeispiel der Erfindung anhand von Zeichnungen näher beschrieben. Es zeigt

Figur 1 schematisch eine Aufsicht auf die erfindungsgemäße Vorrichtung mit zwei in den Palettierbereich eingelaufenen Säcken,

Figur 2 schematisch eine Seitenansicht des Palettierbereichs,

Figur 3 die die Säcke speichernde Umlenkeinrichtung in der Stellung zum Einlaufen der Säcke,

Figur 4 die Förderbahn gemäß Figur 3 in der Stellung zum Auslaufen der Säcke,

Figur 5 eine Aufsicht auf die Umlenkeinrichtung gemäß den Figuren 3 und 4.

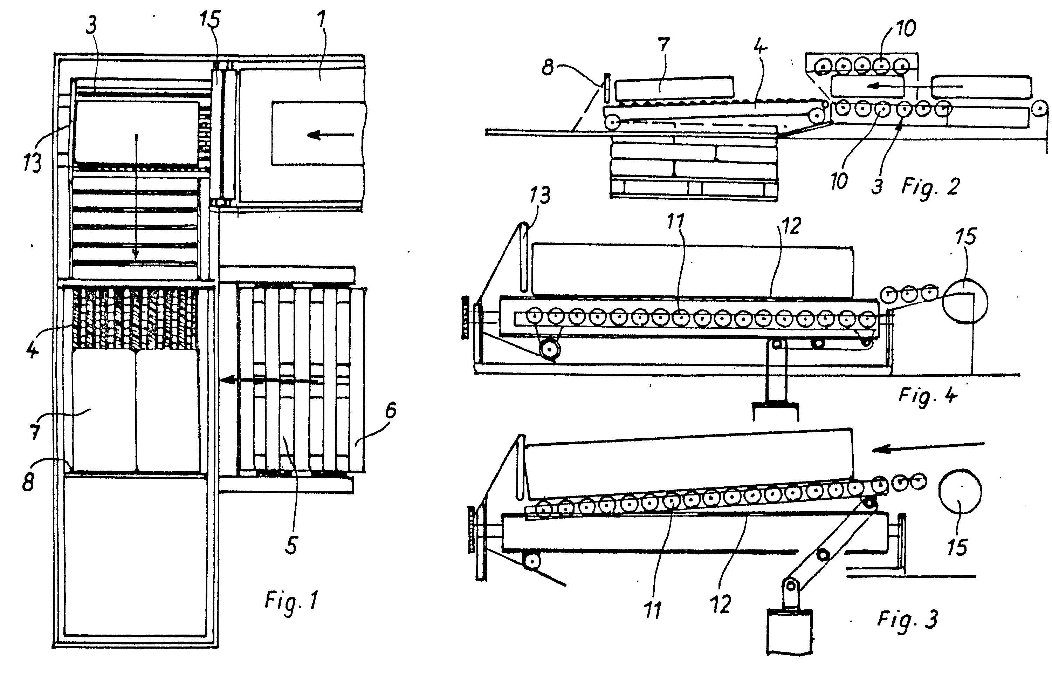

Die erfindungsgemäße Vorrichtung zum Stapeln von Stück- oder Sackgut auf Paletten, insbesondere zum Stapeln von Säcken, besteht gemäß Figur 1 aus verschiedenen betrieblich miteinander verbundenen Stationen. Es handelt sich dabei um eine Zuführbahn 1 für das Gut, welches mit 7 bezeichnet ist, wobei sich daran eine Umlenkeinrichtung 3 anschließt, die über Übergaberollen 15 der Zuführbahn beschickt wird und in welcher die Palettenlagen schon teilweise zusammengestellt werden können, wobei daran eine Transport- und Glättbahn 10 mit angetriebenen oberen und unteren Rollen anschließt, welche die Säcke automatisch auf den Ablegewagen weiterleitet. Der Ablegewagen, auf dem eine Lage vollständig angesammelt wird, besteht erfindungsgemäß aus einem Rollenrost und wird zur Ablage der angesammelten Güter auf die Palette unter diesen Gütern herausgezogen.

Auf der beliebig ausgestalteten Zuführbahn 1 laufen die Säcke, die je nach den Erfordernissen der Palettenlage zuvor von einer Dreheinrichtung in bekannter Weise aus der Längserstreckung um 90° gedreht oder nicht gedreht werden, zur Umlenkeinrichtung 3.

Auf diese gelangt das zu fördernde Gut über Übergaberollen 15, die angetrieben oder nicht angetrieben sein können, und läuft dann in der Umlenkeinrichtung den Rollenrost 11 in leicht geneigter Stellung bis zum Anschlag entlang. Der Rollenrost 11 ist dabei über die Rollenbahn 12 hinaus angehoben und wird über einen Schwenkhebel von einer Kolben-Zylinder-Einheit in dieser Stellung gehalten. Das äußere Ende ruht dabei auf einer Bahn und ist auf dieser mittels einer Rolle verschieblich.

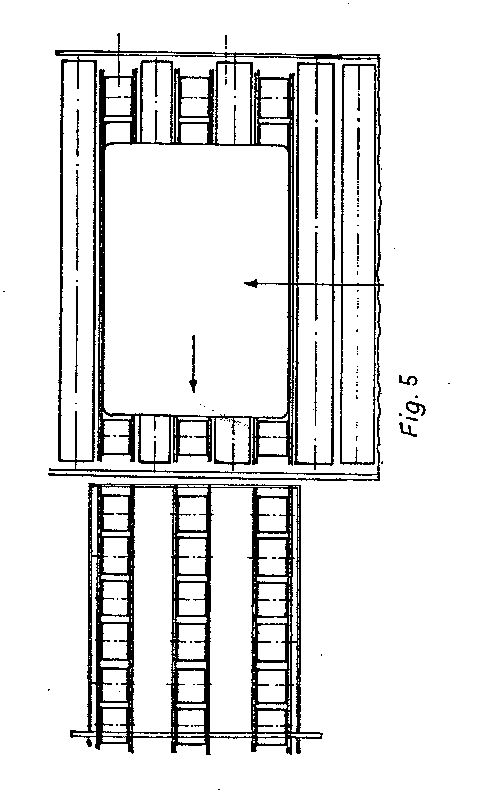

Nach dem Einlaufen und Speichern eines Teiles des zu palettierenden Gutes wird der Rollenrost 11 in die Stellung gemäß Figur 4 abgesenkt. Das zu fördernde Gut liegt jetzt auf der Rollenbahn 12 auf, die ihrerseits mit einer leichten Neigung zum Palettierbereich hin geneigt ist und das Gut läuft dann im rechten Winkel zu seiner vorherigen Bewegungsrichtung von der Umlenkeinrichtung 3 ab.

An die Umlenkeinrichtung 3 schließt sich eine Glättstation 10 an, welche oben und unten angeordnete, querverlaufende, angetriebene Rollen aufweist.

Das zu palettierende Gut läuft dann gemäß Figur 2 auf einen Ablegewagen auf, welcher wiederum einzelne Rollenbahnen aufweist. Nach Ansammlung einer vollständigen Lage auf dem Ablegewagen 4 wird dieser gemäß Figur 2 unter der angesammelten Lage herausgezogen und die zu palettierenden Güter, die von einem Anschlag 8 gehalten werden, senken sich auf die Palette oder auf die oberste auf der Palette bereits befindlichen Lage ab. Die Palette senkt sich dann wiederum um die Höhe einer Lage ab, und der Ablegewagen 4 wird wieder eingefahren, um die nächsten Güter aufzunehmen.

Es hat sich für den Fachmann überraschend herausgestellt, daß selbst für Zementsäcke eine Neigung der genannten Rollenbahnen von 4% ausreichend ist. Bei der Bearbeitung von Paketen und dergleichen sind sogar Neigungswinkel von 2% ausreichend und es ist daher ersichtlich, daß die anzuwendenden Hübe nur gering sind und daher ein einfacher Aufbau der erfindungsgemäßen Vorrichtung gegeben ist, wobei durch das Fehlen von Schubblechen auch die aufzuwendende Energie nur gering ist. Insbesondere sind die Rollenroste oder Rollenbahnen vorteilhaft wegen der geringen Rollenreibung im Vergleich zur Gleitreibung bei Verwendung von Blechen früherer Konstruktion.

**Patentansprüche**

1. Vorrichtung zum Stapeln von Stück- oder Sackgut auf Paletten, die miteinander verbunden eine Zuführbahn (1) für das Gut (7), eine die Güter gleichzeitig speichernde Umlenkeinrichtung (3) und einen im Palettierbereich angeordneten Ablegewagen (4) aufweist, dadurch gekennzeichnet, daß die Umlenkeinrichtung (3) einen Rollenrost (11) enthält, dessen Neigung zu einem Anschlag (13) hinweist und der unter eine Rollenbahn (12) absenkbar ist, deren Rollen rechtwinklig zu den Rollen des Rollenrostes (11) verlaufen.

2. Vorrichtung nach Anspruch 1, dadurch gekennzeichnet, daß der Ablegewagen (4) aus einem Rollenrost besteht, dessen Rollen angetrieben oder nicht angetrieben werden, und der in Arbeitsrichtung seiner Rollen in horizontaler und/oder leicht geneigter Ebene beweglich ist.

**Claims**

1. An apparatus for stacking articles or bagged goods on pallets, comprising, interconnected to each other, a feed track (1) for the articles or goods (7), a diverting unit (3) which simultaneously stores the articles, and a deposition car (4) positioned in the pallet stacking station, characterized in that the diverting unit (3) includes a roller grid (11) which is inclined towards a stop (13) and which is adapted to be lowered below a roller track (12) the rollers of which extend under right angles relative to the rollers of the roller grid (11).

2. The apparatus according to claims 1, characterized in that the deposition car (4) comprises a roller grid the rollers of which are driven or not driven, and which is movable in a horizontal and/ or slightly inclined plane in the direction of operation of its rollers.

**Revendications**

1. Appareil d'empilage d'articles ou matières ensachées sur palettes, comportant, en association mutuelle, une voie d'amenée (1) pour les articles (7), un dispositif de changement de direction (3) sur lequel les articles peuvent en même temps être accumulés, et un chariot de dépôt (4) agencé dans la zone de palettisation, caractérisé en ce que le dispositif de changement de direction (3) comporte une grille à rouleaux (11) dont la déclivité est dirigée vers une butée (13) et qui peut être abaissée en dessous d'une voie à rouleaux (12) dont les rouleaux sont orientés à angle droit par rapport à ceux de la grille à rouleaux (11).

2. Dispositif selon la revendication 1, caractérisé en ce que le chariot de dépôt (4) consiste en une grille à rouleaux dont les rouleaux sont entraînés ou non-entraînés et qui est mobile dans la direction de travail de ces rouleaux, dans un plan horizontal et/ou légèrement incliné.

Fig. 1

Fig. 2

Fig. 3

Fig. 4

Fig. 5